# EUROPÄISCHE PATENTSCHRIFT

(11) **EP 4 630 946 B1**
(45) Veröffentlichungstag und Bekanntmachung des Hinweises auf die Patenterteilung: **23.09.2026**
(21) Anmeldenummer: 23828690.0
(22) Anmeldetag: 06.12.2023
(51) Int. Cl.: G06F 21/53, G06F 9/455, G06F 21/62

(54) **VERFAHREN UND SYSTEM ZUR BEHANDLUNG VON MINDESTENS EINEM UNBEFUGTEN ZUGRIFF AUF MINDESTENS EINE GEMEINSAME RESSOURCE DURCH MINDESTENS EINE CONTAINERINSTANZ**
METHOD AND SYSTEM FOR HANDLING AT LEAST ONE UNAUTHORIZED ACCESS TO AT LEAST ONE COMMON RESOURCE BY AT LEAST ONE CONTAINER INSTANCE
PROCÉDÉ ET SYSTÈME DE TRAITEMENT D'AU MOINS UN ACCÈS NON AUTORISÉ À AU MOINS UNE RESSOURCE PARTAGÉE PAR AU MOINS UNE INSTANCE DE CONTENEUR

(30) Priorität: 31.01.2023 EP 23154229
(43) Veröffentlichungstag der Anmeldung: 15.10.2025
(73) Patentinhaber: Siemens Aktiengesellschaft, 80333 München (DE)
(72) Erfinder: KNIERIM, Christian, 81373 München (DE)
(74) Vertreter: Siemens Patent Attorneys
(86) Internationale Anmeldenummer: PCT/EP2023/084492
(87) Internationale Veröffentlichungsnummer: WO 2024/160420

(56) Entgegenhaltungen:
- US-A1- 2020 204 592
- SIEMENS AG CHRISTIAN PETER FEIST DE-MÜNCHEN ET AL: "Mechanismus zum Schutz von Shared Volumes auf Edge Geräten", PRIOR ART PUBLISHING GMBH, PRIOR ART PUBLISHING GMBH, MANFRED-VON-RICHTHOFEN-STR. 9, 12101 BERLIN GERMANY, vol. www.priorartregister.com, 3 November 2021 (2021-11-03), pages 1 - 7, XP007024416

## Beschreibung

Die Erfindung betrifft ein Verfahren und eine Anordnung sowie zugehörige Vorrichtungen und ein zugehöriges Computerprogrammprodukt.

Da industrielle Systeme (Steuergeräte, Industrie PCs, IoT- und Edge-Geräte, Cloud-Server) oft über einen langen Zeitraum im Feld verwendet werden, sind sie sich ständig ändernden Voraussetzungen und einem dynamischen Umfeld ausgesetzt. Um mit diesen Umständen umzugehen, werden vor allem neue Geräte so entwickelt, dass sie über die Nutzungszeit flexibel angepasst werden können, z.B. durch die Unterstützung von nachladbaren Applikationen bzw. Anwendungen bzw. Apps. Geeignet dafür sind.

Software Container, im Weiteren kurz Container genannt. Container stellen somit eine Art der Virtualisierung einer Laufzeitumgebung auf einem Gastrechner, auch Hostsystem genannt, dar und kapseln eine in einem Container betriebene Anwendung vom darunterliegenden Hostsystem ab. Anwendungen, auch Applikationen genannt, werden mittlerweile in vielen Bereichen wie beispielsweise in der Industrieautomation und in der Prozesssteuerung, aber auch für Anwendungen in Transportsystemen oder Fahrzeugen mittels Container implementiert.

Um einen Container auf dem Hostsystem starten zu können, wird ein Containerabbild (auch Containerimage) benötigt, welches neben einem Anwendungsprogramm, auch Applikationssoftware genannt, die für das Anwendungsprogramm erforderlichen Binärprogramme und Bibliotheken enthält. Das Containerimage selbst kann aus mehreren aufeinander aufbauenden Schichten (Layern) bestehen, die geschützt (kryptographisch, speichergeschützt, etc.) werden können. Ein Containerimage ist normalerweise portabel, kann in Repositories (auch Container-Registry genannt) gespeichert und mit anderen Nutzern geteilt werden.

Auf dem Hostsystem wird aus dem Containerabbild eine Containerinstanz, vereinfacht ausgedrückt ein Container, erstellt und auf einer (Container-)Laufzeitumgebung, wie beispielsweise "Docker", ausgeführt. Bei Bedarf, beispielsweise bei einem verstärkten Aufruf der Anwendung durch Nutzer, können aus dem gleichen Containerabbild weitere Containerinstanzen auf dem gleichen oder einem anderen Hostsystem, das auch als virtualisierte Hardware-Ressource ausgebildet sein kann, erzeugt und ausgeführt werden. Aus den Layern eines Abbildes und einer weiteren flüchtigen Schicht wird das Wurzel(root)-Dateisystem einer Containerinstanz gebildet. Dabei dürfen mehrere Containerinstanzen ("als Gäste"), isoliert voneinander den Betriebssystemkern (auch Kernel genannt) eines Hostsystems nutzen. Im Weiteren werden die Bezeichnungen Containerinstanz und Container synonym verwendet.

Beim Start der Containerinstanz werden den in der Containerinstanz genannten Prozessen Ausführungsberechtigungen, auch Privilegien genannt, zugeordnet und auch eine Einbindung von Geräten- oder anderen Dateisystem-Ressourcen des darunterliegenden Geräts bzw. Systems vereinbart. Um Angriffe durch die Anwendung auf das Hostsystem zu vermeiden, können diese Ausführungsberechtigungen eingeschränkt (= Restriktionen) werden, sodass dem Container lediglich die für den Betrieb der Anwendung erforderlichen Rechte zugewiesen werden. Üblicherweise besteht eine containerisierte Anwendung nicht aus einer einzigen isolierten Containerinstanz, sondern wird aufgrund einer Microservice-basierten Architektur im Verbund mit anderen Containerinstanzen als Gesamtanwendung bereitgestellt. Ein Zusammenspiel mehrerer Containerinstanzen bzw. ein Zusammenspiel deren virtueller Infrastruktur und insbesondere deren Laufzeit- und Prozessberechtigungen, wird unter anderem in einer Bereitstellungsinformation, auch Deployment-Konfiguration genannt, definiert. Im nichtorchestrierten Bereich kann hierfür beispielsweise ein von Docker spezifiziertes "docker-compose" Format verwendet werden.

In diesem Zusammenspiel mehrerer Containerinstanzen ist besonders kritisch, dass sich unterschiedliche, isoliert ausgeführte Containerinstanzen den gleichen Betriebssystem-Kernel teilen.

Mit entsprechenden Privilegien ausgestattete Containerinstanzen können in anderen Containerinstanzen Aktionen durchführen. Aktionen können hierbei z.B. das Tracen (Verfolgen) von Prozessen, das Senden von Prozess-Signalen (wie z.B. Kill), die Durchführung von Schreiboperationen in anderen Instanzen zugewiesenen Dateisystembereichen oder das Starten weiterer Prozesse in einem Container sein. Das Durchführen solcher Aktionen von einer solchen Containerinstanz auf eine andere Containerinstanz kann durch die Laufzeitumgebung nur verhindert werden, indem beim Start einer Containerinstanz von der Laufzeitumgebung gewisse Privilegien zugelassen bzw. eingeschränkt werden. Es sind gewisse Laufzeitparameter in der Konfiguration der Laufzeitumgebung zu unterbinden. Container dürfen im Standardfall nicht auf den Namensraum anderer Container benutzen. Innerhalb der Deployment-Konfiguration kann jedoch angegeben werden, dass eine Containerinstanz den Namensraum einer anderen Containerinstanz benutzen darf. Namensräume bieten die Möglichkeit, dass beispielsweise für Netzwerkverbindungen, Dateisystembereiche oder Prozesse isolierte Bereiche vom Betriebssystemkern zur Verfügung gestellt werden und nicht die gesamten Ressourcen des darunterliegenden Systems für in einem Namensraum gestarteten Prozess sichtbar sind. Bei der Containerisierungstechnik ist die Verwendung von Namensräumen ein elementarer Bestandteil der Isolation einzelner Instanzen.

Sofern eine Containerinstanz keine Annahme treffen kann, welche Restriktionen auf der Plattform durchgesetzt werden, kann diese nicht für sich annehmen, dass sie gegenüber anderen Containerinstanzen ausreichend isoliert ist und somit kein unberechtigtes Auslesen oder Modifikationen durch eine andere Containerinstanz durchgeführt wird.

Beispielsweise besteht bei dem Anwendungsbeispiel der Industrial Edge, welche beispielsweise in https://new.siemens.com/de/de/produkte/automatisierung/themen felder/industrial-edge.html beschrieben wird, die Möglichkeit, dass diverse Hersteller unterschiedliche Apps z.B. in einem App-Store bereitstellen können, welche aus mehreren unterschiedlichen Containern bestehen und vom Betreiber des Gerätes analog zu Smartphone Apps auf dem Gerät installiert werden. Der Betreiber der Edge Plattform kann in diesem Umfeld zwar Sicherheitsanforderungen definieren, diese können sich jedoch von Anwendungsfall zu Anwendungsfall unterscheiden, sodass eine App bzw. eine erste innerhalb einer App betriebenen Containerinstanz nicht informiert wird, sobald eine zweite/ weitere Containerinstanz einer anderen App auf Ressourcen, die für die App bereitgestellt wurden, zugreift.

In EP 21211418.5 ist bereits ein Verfahren zur Durchsetzung von Integritätsbedingungen einer ersten Container-basierten Anwendung gegenüber allen zweiten Container-basierten Anwendungen, die auf einer gemeinsamen Laufzeitumgebung eines Hostsystems ausgeführt werden, bekannt. Be dieser Lösung liegt die Annahme zugrunde, dass der Container-Laufzeitumgebung die geforderten Einschränkungen auf dem kompletten Hostsystem durchsetzt werden und diese auch zur Laufzeit der jeweiligen Apps gültig bleiben. Die Einhaltung der seitens der Anwendung definierten Richtlinien werden nur zum Deployment überprüft. Zur Laufzeit erfolgt jedoch keine weitere Prüfung. Die in einer zu schützenden App betriebenen Container werden auch nicht informiert, wenn Container anderer Apps auf diese Containerinstanzen zugreifen und in deren Namensraum beispielsweise Prozesse überwachen, neue Prozesse starten oder Schreiboperationen ausführen. Außerdem können Verletzungen einer Richtlinie, auch Policy genannt, nicht Anwendungs- bzw. Containerinstanz-spezifisch bearbeitet werden. Werden die Anforderungen nicht erfüllt, wird das Deployment der Anwendung verweigert.

Bekannt sind Integritätsmonitoringsysteme wie Falco (https://falco.org/). Mit Hilfe einer solchen Lösung können auf dem darunterliegenden Hostsystem mit Hilfe statischer Regeln Integritätsanforderungen an den eigenen Container überprüft werden. Es kann jedoch mit einer Falco-basierten Lösung nicht überprüft werden, ob beispielsweise die Prozesse vom darunterliegenden Host-Namensraum von anderen, entsprechend privilegierten Containern verfolgt werden oder z.B. sogenannte Sidecar-Container gestartet werden, die die Netzwerk-Konfiguration der Containerinstanz modifizieren. Ein Sidecar ist ein anderer Container der Ressourcen teilt wie beispielsweise ein Netzwerknamensraum oder das Container-Dateisystem.

Des Weiteren wird von Falco lediglich eine Alarmierung außerhalb des Containers ausgeführt, nicht jedoch die Containerinstanz direkt benachrichtigt, sodass innerhalb der App bzw. Containerinstanz ein Fehlerhandling (wie z.B. neues Einlesen der Konfiguration, Unterbindung bis zum Erkannten Vorfall erlaubter Handlungen) durchgeführt werden kann. Somit kann der Betreiber der Plattform zwar alarmiert werden, jedoch der App-Entwickler, welcher die Deployment-Konfiguration und die Containerimages erstellt, nicht eigenständige Integritätsanforderungen definieren und daraus abgeleitete, zur Laufzeit betreffende Handlungsoperationen erstellen.

Das Dokument der SIEMENS AG mit den Autoren CHRISTIAN PETER FEIST et al.: "Mechanismus zum Schutz von Shared Volumes auf Edge Geräten", PRIOR ART PUBLISHING GMBH, PRIOR ART PUBLISHING GMBH, MANFRED-VON-RICHTHOFEN-STR. 9, 12101 BERLIN GERMANY, Bd. www.priorartregister.com, 3. November 2021 (2021-11-03), Seiten 1-7, XP007024416, beschreibt, dass einzelne Apps untereinander Daten mittels Shared Volumes austauschen müssen. Die Autoren schlagen eine Lösung vor, die Shared Volumes auf einem Gerät mit einem eindeutigen Identifier (dt.: Identifikator) zu versehen und jede App, die rechtmäßigen Zugriff auf diese Volumes haben soll, ebenfalls diesen Identifier zuzuordnen. Zur Laufzeit wird dann bei einem Zugriff durch die App auf das Volume geprüft, ob dieser entsprechende Identifier zugeordnet wurde.

Der Erfindung liegt daher die Aufgabe zugrunde, ein Verfahren und ein System derart auszugestalten, dass
eine gegenüber dem Stand der Technik verbesserte Behandlung von mindestens einem unbefugten Zugriff auf eine oder mehrere gemeinsame Ressourcen durch eine Containerinstanz, die in einer Laufzeitumgebung zusammen mit anderen die gemeinsame Ressource nutzenden Containerinstanzen ausgeführt wird und in welcher eine Anwendung betrieben wird, gewährleistet wird.

Diese Aufgabe wird durch die Merkmale gemäß den unabhängigen Patentansprüchen gelöst. Vorteilhafte Ausführungsformen der vorliegenden Erfindung sind in den abhängigen Ansprüchen beschrieben.

Die Erfindung beansprucht ein computerimplementiertes Verfahren zur Behandlung von mindestens einem unbefugten Zugriff auf mindestens eine gemeinsame Ressource durch mindestens eine erste Containerinstanz, wobei die mindestens eine erste Containerinstanz und mindestens eine zweite Containerinstanz auf einer gemeinsamen Laufzeitumgebung eines Hostsystem ausgeführt werden, wobei die mindestens eine zweite Containerinstanz, die mindestens eine gemeinsame Ressource nutzt,
aufweisend folgende Verfahrensschritte:
- Festlegen und bereitstellen mindestens eines Zugriffsberechtigungskriteriums für eine der zweiten Containerinstanzen, das regelt, welche Operationen mit Zugriff bzw. Wirkung auf die gemeinsame Ressource durch die mindestens eine erste Containerinstanz befugt bzw. erlaubt oder unbefugt bzw. verboten sind,
- Überprüfen beim Start einer neuen ersten Containerinstanz, ob für die zweite Containerinstanz zumindest ein Zugriffsberechtigungskriterium bereitgestellt worden ist, wobei das mindestens eine Zugriffsberechtigungskriterium in einem zur zweiten Containerinstanz gehörigen Containerabbild beinhaltet ist,
- bei einer positiven Überprüfung Überwachen der Operationen der ersten Containerinstanz während ihrer Ausführung, ob diese Operationen unbefugt gemäß des zumindest einen Zugriffsberechtigungskriteriums sind, und
- wenn beim Überwachen zumindest eine Operation als unbefugt erkannt wird, dann Einleiten einer den Zugriff auf die gemeinsame Ressource entgegenwirkende bzw. unterbindende Behandlung mittels einer Alarmnachricht für die zweite Containerinstanz oder durch Stoppen der Ausführung der zweiten Containerinstanz.

Stoppen kann hierbei Unterbrechen oder Beenden bedeuten.

Bei einer negativen Überprüfung können die Operationen der ersten Containerinstanz überwacht werden und, wenn von Seiten der Laufzeitumgebung alle auf die gemeinsamen Ressourcen zugreifenden bzw. wirkenden Operationen als unbefugt gelten (Deny by default), bei Ausführung einer solchen als unbefugt geltenden Operation eine den Zugriff auf die gemeinsame Ressource entgegenwirkende bzw. unterbindende Behandlung mittels einer Alarmnachricht für die zweite Containerinstanz oder durch Stoppen der Ausführung der zweiten Containerinstanz eingeleitet wird.

Unter gemeinsamen Ressourcen wird in diesem Kontext einerseits ein gemeinsamer Namensraum verstanden, der durch mehrere Containerinstanzen geteilt wird. Andererseits wird unter gemeinsamen Ressourcen ein Vaternamensraum, der von einem Hostsystem genutzt wird, verstanden, von dem aus beim Start von mehreren Containerinstanzen mehrere Kind-Namensräume für die jeweiligen Containerinstanzen erzeugt werden, welche eigenständig für jede Containerinstanz betrieben werden, ohne dass der jeweilige Kind-Namensraum von einer Containerinstanz mit einer anderen Containerinstanz geteilt wird. Gemeinsame Ressourcen können aber auch Dateisystemobjekte, welche in der Regel Dateien oder Verzeichnisse/Ordner sind, und Gerätedateien sein. Wenn solche Objekte bzw. Dateien virtuell ausgestaltet sind, dann gelten ähnliche Vater-Kind-Beziehungen wie bei den Namensräumen. Wenn diese Objekte bzw. Dateien physisch ausgestaltet sind, liegen sie auf dem Hostsystem. Ggf. mehrere Containerinstanzen greifen auf sie über die Laufzeitumgebung zu.

So können Containerinstanzen voneinander isoliert werden, indem diese ihre Prozesse in eigenständigen Namensräumen betreiben. Das Namenraum-Konzept ermöglicht die Isolierung von Netzwerk, Prozessen oder eingehängten Dateisystemen. Für den jeweiligen Anwendungsfall gibt es eigenständige Nameräume. Zudem sind Namensräume in der Regel hierarchisch aufgebaut, sodass beim Start einer Containerinstanz Kind-Nameräume des jeweiligen Host-Namensraum erzeugt werden. Containerinstanzen können zum Start komplett in eigenen Namenräumen betrieben werden oder auch gemeinsam in geteilten Namenräumen laufen. Hierbei ist es nicht erforderlich, dass sämtliche Containerinstanzen sich alle Namensräume teilen, sondern auch einzelne Typen von Namensräumen geteilt werden; z.B. lediglich der Netzwerk-Namenraum. Letzteres kommt zur bei sogenannten Sidecar-Containern zum Einsatz, die beispielsweise einen transparenten Proxy (Stellvertreter) für einen Workload-Container realisieren. Bei entsprechend privilegierten Containern ist es zudem möglich, dass diese im Host-Namenraum betrieben werden und somit im Vater-Namenraum anderer Containerinstanzen betrieben werden.

Mit anderen Worten werden die anderen Containerinstanzen, hier die ersten, überwacht, wenn diese die auf die gemeinsamen Ressourcen der zu schützenden Containerinstanz, hier die zweite, zugreifen und zumindest ein entsprechendes Zugriffsberechtigungskriterium vorhanden ist.
Demnach wird nicht die "fremde" Containerinstanz, hier die gestartete erste Containerinstanz, abgewehrt bei unbefugtem Zugriff, sondern die eigene Containerinstanz, hier die zweite Containerinstanz wird mit einer entsprechenden Behandlung bzw. Maßnahme, die sie selbst in der Hand hat, geschützt.

Ein Berechtigungskriterium kann derart ausgestaltet sein, dass Operationen als erlaubt bzw. als unbefugt/verboten mit einem entsprechenden Kennzeichen/Label gekennzeichnet sind. Das mindestens eine Berechtigungskriterium, das als Regelwerk ausgestalte sein kann, kann durch gemeinsam mit der Deploymentkonfiguration oder dem Containerabbild durch eine Signatur integritätsgesichert werden. Hierdurch wird es gegen unberechtigte Modifikation geschützt. Die Signatur kann somit beim Deployment durch die Laufzeitumgebung validiert werden.

Aus dem mindestens einen Zugriffsberechtigungskriterium kann abgeleitet werden, ob eine Alarmnachricht oder ein Stoppen der Ausführung der zu schützenden zweiten Containerinstanz eingeleitet werden soll.

Das Verfahren ist vorzugsweise rechner-/computergestützt bzw. computerimplementiert ausgebildet bzw. wird vorzugsweise rechner-/computergestützt bzw. computerimplementiert ausgeführt. Die Schritte des Verfahrens können beliebig oft wiederholt werden und Wiederholungen können ggf. anhand definierter Bedingungen, sei es ereignisorientiert oder zeitlich begrenzt, beendet werden.

Die Überwachungsfunktion kann als Reporting Client für die Containerinstanzen ausgestaltet sein; diese kann auf dem Gerät/Hostsystem integriert (z.B. Plugin/Agent), aber auch außerhalb des Hostsystem auf einem Remotesystem betrieben werden.

Ein weiterer Aspekt der Erfindung ist ein System geeignet zur Behandlung von mindestens einem unbefugten Zugriff auf mindestens eine gemeinsame Ressource durch mindestens eine erste Containerinstanz, wobei die mindestens eine erste Containerinstanz und mindestens eine zweite Containerinstanz auf einer gemeinsamen Laufzeitumgebung eines Hostsystem ausführbar sind, wobei die mindestens eine zweite Containerinstanz die mindestens eine gemeinsame Ressource nutzt, umfassend eine Bereitstellungseinheit und eine Überwachungseinheit, die derart ausgestaltet sind, dass
- durch die Bereitstellungseinheit mindestens ein Zugriffsberechtigungskriteriums für eine der zweiten Containerinstanzen festlegt und bereitstellt wird, welches regelt, welche Operationen mit Zugriff auf die gemeinsame Ressource durch die mindestens eine erste Containerinstanz befugt oder unbefugt sind, und dass
- durch die Überwachungseinheit beim Start einer neuen ersten Containerinstanz überprüft wird, ob für die zweite Containerinstanz zumindest ein Zugriffsberechtigungskriterium bereitgestellt worden ist, wobei das mindestens eine Zugriffsberechtigungskriterium in einem zur zweiten Containerinstanz gehörigen Containerabbild beinhaltet ist, und
- bei einer positiven Überprüfung durch die Überwachungseinheit die Operationen der ersten Containerinstanz während ihrer Ausführung überwacht werden, ob diese Operationen unbefugt gemäß des zumindest einen Zugriffsberechtigungskriteriums sind, und dass
- wenn beim Überwachen zumindest eine Operation als unbefugt erkannt wird, dann eine den Zugriff auf die gemeinsamen Ressourcen entgegenwirkende Behandlung mittels einer Alarmnachricht für die zweite Containerinstanz oder durch Stoppen der Ausführung der zweiten Containerinstanz eingeleitet wird.

Die Überwachungseinheit kann als Reporting Client für die Containerinstanzen ausgestaltet sein; diese kann auf dem Hostsystem integriert (z.B. Plugin/Agent), aber auch außerhalb des Hostsystem auf einem Remotesystem betrieben werden.

Die Bereitstellungseinheit kann ebenfalls Hostsystem (z.B. Plugin/Agent) integriert sein. Eine Laufzeitkonfiguration ergibt sich z.B. durch eine von der Bereitstellungseinheit zur Verfügung gestellten und zuvor z.B. durch einen App-Entwickler bzw. App-Anbieter festgelegten Deploymentkonfiguration, z.B. Starten/Stoppen von Containerinstanzen, durch die Laufzeitumgebung ggf. durch Update, externe Werkzeuge zur Kontrolle von Zugriffen auf die gemeinsamen Ressourcen durch andere Containerinstanzen. Die Deploymentkonfiguration kann auch durch entsprechende Softwarewerkzeuge automatisiert festgelegt und unter anderem sogenannte Default-Konfigurationen umfassen.

Des Weiteren kann ein Computerprogrammprodukt eingesetzt werden, umfassend ein nichtflüchtiges Speichermedium, auf dem ein ladbarer und ausführbarer Programmcode gespeichert ist, welches das Verfahren nach einem der oben genannten Ausführungsformen in einer Prozessoreinheit insbesondere einer oder verteilt in mehreren Vorrichtungen nach einer der vorhergehend beschriebenen Ausführungsformen ausführt.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die Ausführungsumgebung erstellt werden kann.

Das System bzw. Vorrichtungen, Einheiten bzw. Geräte und Computerprogramm(-produkte), welches einen ladbaren und ausführbaren Programmkode oder verteilt ladbare und ausführbare Programmkodemodule umfassen kann, können entsprechend der Weiterbildungen/Ausführungsformen des vorgenannten Verfahrens und deren Weiterbildungen/Ausführungsformen und umgekehrt ausgebildet sein.

Eine Ausführungsform der Erfindung sieht vor, dass in das System ein oder mehrere Einheiten bzw. Komponenten bzw. Einrichtungen integriert sein können und diese als eine Software-, Firmware- bzw. Hardware-Komponente ausgebildet sein können. Das System umfasst in der Regel wenigstens einen Prozessor, der auf Betriebssystemebene als Kernel Operationen ausführen kann.

Bei einem Prozessor bzw. Prozessoreinheit kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

### Ausführungsbeispiele der Erfindung

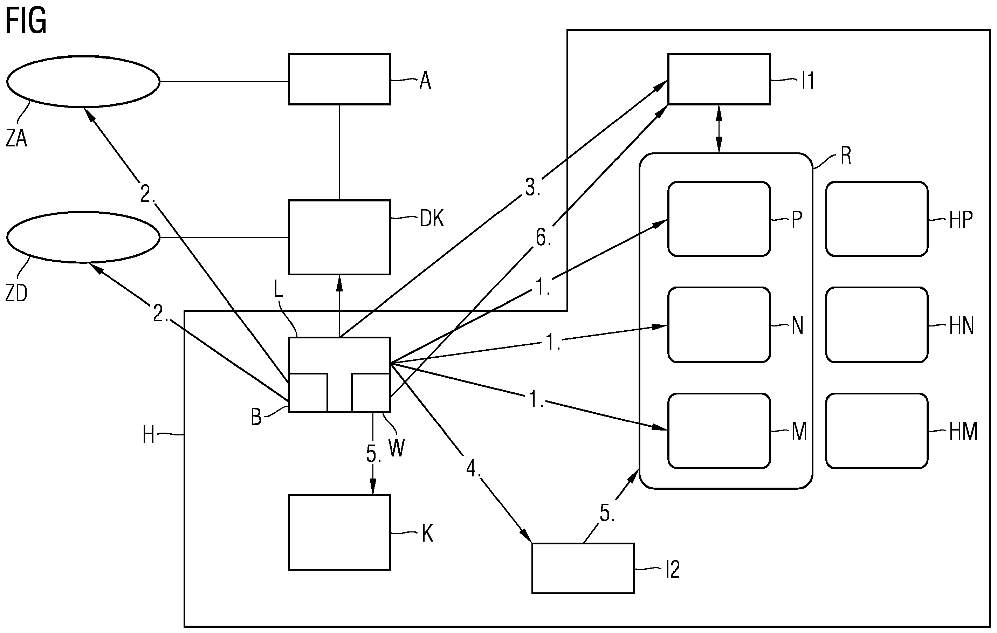

Ausführungsbeispiele des erfindungsgemäßen Verfahrens und der Übertragungsvorrichtung sind in den Zeichnungen beispielhaft dargestellt und werden anhand der nachfolgenden Beschreibung näher erläutert. Es zeigt:
Die Figur eine beispielhafte Anordnung, bei der das erfindungsgemäße Verfahren angewandt werden kann.

Die Figur zeigt ein Hostsystem H mit einer Laufzeitumgebung L, die eine Überwachungseinheit W und eine Bereitstellungseinheit B aufweist. Beide Einheiten W und B können auch ein einer Einheit zusammengefasst sein. Auf der Betriebssystemebene tauscht die Laufzeitumgebung mit einem Kernel K Befehle bzw. Instruktionen aus. Der Kernel steuert letztendlich Operationen. Vor dem Start einer Containerinstanz I1 für eine Anwendung wird bei der Entwicklung der Anwendung bzw. App, die in einer Containerinstanz betreibbar ist, für die Anwendung bzw. für das Containerabbild A, aus dem die zu startende Containerinstanz mit Hilfe der Laufzeitumgebung erzeugt wird, eine Deploymentkonfiguration DK festgelegt. Die Deploymentkonfiguration, auch Bereitstellungsinformation genannt, kann auch von einem App-Anbieter via eines App-Stores festgelegt werden. Das Festlegen einer Deploymentkonfiguration kann auch abhängig vom App-Typ automatisch ggf. mit Standard-Werten (Default-Werten) generiert werden. Es wird zusätzlich mindestens ein Zugriffsberechtigungskriterium ggf. bei der Entwicklung oder automatisch (s.o.) festgelegt und ggf. mittels eines App-Stores oder einer anderen Downloadplattform bereitgestellt. Es sind folgende Varianten des mindestens einen Zugriffsberechtigungskriterium auch in Kombination der Varianten möglich. Es werden deploymentbasierte Zugriffsregeln ZD für und/oder abbildbasierte Zugriffsregeln ZA für eine zu schützende Containerinstanz I1 bereitgestellt. Diese Zugriffsregeln werden im Beispiel von einer Bereitstellungseinheit B in Schritt 2 geladen. In Schritt 1 wird von der Laufzeitumgebung L mindestens eine Ressource R für die Containerinstanz I1 erzeugt und die Containerinstanz I1 in Schritt 3 auch gestartet, die die erzeugte mindestens eine Ressource R nutzt. In Schritt 4 wird eine weitere Containerinstanz I2 gestartet. Da die Containerinstanz I2 in Schritt 5 Operationen auf die Ressource R, gemeinsame Ressource genannt, durchführt, ist diese Containerinstanz I2 erfindungsgemäß zu überwachen. Die gemeinsame Ressource kann die von Containerinstanzen jeweils verwendeten Namensräume und/oder den vom Hostsystem verwendeten Namensraum und/oder Dateisystemobjekte und/oder Gerätedateien betreffen. Im Beispiel werden als gemeinsame Ressource Namensräume verwendet. Die Erfindung kann analog auf die Dateisystemobjekt bzw. Gerätedateien angewandt werden.

Namensräume können Prozessnamensräume, Netzwerknamensräume oder Mount-Namensräume (Mount- Einhängen von Dateien bzw. Verzeichnissen) sein. Zum Hostsystem gehörenden im Beispiel ein Prozessnamensraum HP, ein Netzwerk-Namensraum HN und ein Mount-Namensraum HM. In Schritt 1 werden beispielhaft der Prozessnamensraum P, der Netzwerknamensraum N und der Mount-Namensraum M, die zur Containerinstanz I1 gehören, von der Laufzeitumgebung erzeugt. Diese bilden im Beispiel die gemeinsamen Ressourcen R.

In Schritt 5 werden zudem Überwachungsregel in Form von Instruktionen an den Kernel K übergeben, die aus den Zugriffsregeln abgeleitet werden können, sofern beim Start der Containerinstanz I2 von der Überwachungseinheit W überprüft wurde, ob diese Zugriffsregeln die schon gestartete Containerinstanz I1 betreffen. Solche Instruktionen können beispielsweise via eBPF-Programme dem Kernel bereitgestellt werden (eBPF = extended Berkeley Packet https://ebpf.io/).

Erfindungsgemäß wird für eine zu schützende Containerinstanz, im Beispiel I1, sämtliche Operationen anderer Containerinstanzen, im Beispiel I2, überwacht, sofern diese Operationen ihre Namenräume betreffen. Erfolgt in einem Namensraum der zu überwachenden Containerinstanz ein unbefugter bzw. nicht-erlaubter Zugriff, wird die Containerinstanz entweder durch die Container-Laufzeitumgebung gestoppt (beendet oder unterbrochen) oder durch diese mit Hilfe eines entsprechendes Prozesssignal auf den sogenannten Init-Prozess alarmierend informiert (siehe Schritt 6 in der Figur). In einer Zugriffsregel ist hierzu definiert, welche Operationen von anderen Containerinstanzen in den Namensraums der zu überwachenden Containerinstanz erlaubt sind. Es ist auch möglich, dass ein Deny-By-Default für alle Containerinstanzen definiert wird. Die erlaubten Operationen sind üblicherweise System-Aufrufe und können ggf. auch auf Fähigkeiten (Capabilities) oder sogenannte Seccomp-Profile (https://docs.docker.com/engine/security/seccomp/) erweitert werden, da die Capabiities und Seccomp-Profile einen Satz erlaubter Systemaufrufe definieren. Ebenfalls ist es möglich, dass analog zum eingangs erwähnten Falco auf entsprechende Systemaufruf-Parameter geprüft wird und hierdurch zum Beispiel ermittelt wird, welches Objekt mit dem Systemaufruf referenziert wird (z.B. Prozess-ID, Netzwerkschnittstelle oder Objekt im Dateisystem).

Die zu überwachenden Containerinstanzen I2 werden identifiziert, indem überprüft wird, welche Namensräume diese sich mit der zu schützenden Containerinstanz I1 teilen oder in Vater-Namensraums (z.B. dem Host-Prozess-Namensraum HP) der zu überwachenden Containerinstanzen betrieben werden. Die Zugriffsregeln werden entweder mit dem Abbild der zu schützenden Containerinstanz oder ihrer Deploymentkonfiguration assoziiert. Die zu schützenden Containerinstanzen werden in der Zugriffsregel über Deployment- oder Abbild-Labels oder entsprechende Signaturen referenziert, welche die Container-Laufzeitumgebung zuordnet. Ebenfalls wird in den Zugriffsregeln definiert, welche Maßnahmen bei einem Verstoß des Zugriffsregelwerks durchzuführen sind. Maßnahmen können hierbei Kill-Signale oder andere Prozess-Signale sein, die auf den Init-Prozess der zu schützenden Containerinstanz anzuwenden sind.

Erlaubte Operationen in einem Prozess-Namensraum P und/oder HP können beispielsweise das Starten neuer Prozesse, das Durchführen von Traces (Verfolgungen) oder allgemein nur das Auslesen des Prozess-Namensraums sein. Im Mount-Namensraum wären Ausführungsbeispiele das Auslesen des Mount-Namensraums, die Durchführung von Schreiboperationen oder das Ändern von Einhängepunkten. Im Netzwerk-Namensraum wären Ausführungsbeispiele erlaubter Operationen neben dem Auslesen des Netzwerk-Namensraums, die Änderung von Routen, das Öffnen neuer Ports oder z.B. die Aktivierung von Firewall-Regeln. Beim Start einer zu schützenden Containerinstanz wird von der Container-Laufzeitumgebung bzw. einer Überwachungseinheit W, die mit der zu schützenden Containerinstanz assoziierten und durch die Bereitstellungseinheit geladenen Zugriffsregeln eingelesen. Die Überwachungseinheit kann als Erweiterung der Laufzeitumgebung (z.B. als Plugin) oder alternativ als eigenständiger Server-Prozess (analog zu Falco) die Operationen der Container-Laufzeitumgebung überwachen. Bei der Server-Variante können Startoperationen von Containern an der Laufzeitumgebung z.B. über eBPF-Programme oder entsprechend bereitgestellte Module durch den Kernel K ausgelesen werden. Dass eine zu schützende Containerinstanz gestartet werden soll, kann die Laufzeitumgebung auch der Überwachungseinheit über entsprechende Schnittstellen mitteilen. Die Zugriffsregeln werden bei der Server-Variante ebenfalls spätestens mit dem Start der Containerinstanz eingelesen.

Anschließend werden die für die Containerinstanz erforderlichen Namensräume erzeugt (siehe 1. in der Figur). Vorzugsweise wird der Container-Laufzeitumgebung vertraut. Ausschließlich Operationen anderer zu überwachenden Containerinstanzen auf die Namensräume der zu schützenden Containerinstanz sollen überwacht werden, nicht jedoch Prozesse (z.B. Systemdienste), die außerhalb der Container-Laufzeitumgebung verwaltet werden.

Ob eine zu startende Containerinstanz zu überwachen ist, ist davon abhängig, ob diese sich direkt mit der zu schützenden Containerinstanz den Namensraums teilt oder im Vater-Namensraums des Hostsystems betrieben wird und ob für die zu schützende Containerinstanz entsprechende Zugriffsregeln zu festgelegt und bereitgestellt sind.

Zuerst wird der Fall beschrieben, dass sich eine zu überwachende Containerinstanz mit der zu schützenden Containerinstanz einen oder mehrere Namensraums teilt:
Die in die Container-Laufzeitumgebung integrierte Überwachungseinheit oder der eigenständige Serverprozess überprüfen beim Start einer neuen Containerinstanz, ob diese zu überwachen ist, indem überprüft wird, ob es für diese mindestens eine Zugriffsregel gibt, die aufgrund von zugewiesenen Tags/Labels oder Signaturen anzuwenden sind und ob ein Namensraum mit der neu zu startenden Containerinstanz geteilt wird. Ist dies der Fall, werden von der Überwachungseinheit automatisch eBPF-Programme oder entsprechende Kernel-Abfragen mit Hilfe eines Moduls. generiert, die den Init-Prozess der neu zu startenden Containerinstanz und sämtliche bestehenden Kind-Prozesse erfassen und die gemäß Richtlinie relevanten Systemaufrufe und Parameter überwacht. Wird ein neuer Prozess innerhalb der zu überwachenden Containerinstanz gestartet, wird dieser ebenfalls neu hinzugefügt und von dem gleichen eBPF-Programm überwacht. Wird ein Verstoß gegen zumindest eine Zugriffsregel erkannt, wird das Ergebnis von dem Kernel an die Überwachungseinheit zurückgemeldet. Die Überwachungseinheit stoppt abhängig von der in der Zugriffsregel hinterlegten Maßnahme entweder mit Hilfe eines Kill-Signals entweder an Init-Prozess der zu schützenden Containerinstanz oder schickt an diesen ein entsprechendes alarmierendes Prozesssignal. Erfolgt letzteres, kann der Entwickler des Containerabbildes selbst definieren, wie sich seine in der Containerinstanz betriebene Anwendung verhalten soll. Die Containerinstanz kann hierdurch z.B. einzelne Unterprozesse neu starten oder gewisse Funktionalitäten bis zum geplanten Neustart der Anwendung außer Betrieb setzen. Sie kann auch z.B. mit einer Schreiboperation auf einem persistenten Laufwerk über die Laufzeit hinweg den nicht erlaubten Zugriff einer zu schützenden Containerinstanz persistieren und hierdurch bis zur manuellen Zurücksetzung durch den Benutzer sicherstellen, dass die Anwendung in der zu schützenden Containerinstanz in reduziertem Umfang angeboten wird oder sich nicht mehr startet.

Werden zu überwachende Containerinstanzen I2 in den Vater-Namensraums des zu schützenden Namensraums, erfolgt die Ermittlung der zu überwachenden Operationen analog zu dem oben beschriebenen Verfahren für den gleichen Namensraum. Zusätzlich sind jedoch noch weitere Operationen erforderlich: Beim Prozess-Namensraum können Prozesse nur innerhalb des zu schützenden Namensraums gestartet werden, sofern der zu überwachende Container in diesen mit Hilfe von setns (https://linux.die.net/man/2/setns) wechselt oder in diesem von der Laufzeitumgebung mit Hilfe der Deploymentkonfiguration gestartet wird. Die darin betriebenen Prozesse können jedoch auch verfolgt oder gestoppt werden, wenn die Prozesse des zu überwachenden Containerinstanzen I2 im Vater-Namensraum auf diese zugreifen und nicht in deren Namensraum gewechselt wird. Insofern ist im Falle des Prozess-Namensraums von der Überwachungseinheit zu ermitteln, welche Prozess-IDs die zu überwachenden Prozesse der zu schützenden Containerinstanz I1 im Vater-Namensraum besitzen. Gleiches gilt auch für den Mount-Namensraum. Hierbei muss die Überwachungseinheit zum Start der zu überwachenden Containerinstanz überwachen, wie die Pfade des Mount-Namensraums im darüberliegenden Host-Namensraum heißen und auf diese die durchgeführten Operationen überwachen. Beim Netzwerk-Namensraum wird überprüft, ob im darüberliegenden Vaterknoten des zu überwachenden Containers Änderungen innerhalb des Netzwerk-Namensraums über Systemaufrufe durchgeführt werden und diese den zugewiesenen Netzwerk-Namensraums des zu schützenden Containers betreffen.

Durch die Überwachung der Container-Prozesse der zu überwachenden Containerinstanz auf einzelne Namensräume kann auch ein Entwickler einer Applikation verhindern, dass mittels Sidecar-Container transparente Proxies auf einem Cluster betrieben werden, die in dem gleichen Netzwerk Namensraum wie Service Meshes betrieben werden.

Die mindestens eine Zugriffsregel kann gemeinsam mit der Deploymentkonfiguration oder dem Containerimage durch eine Signatur integritätsgesichert werden und hierdurch gegen unberechtigte Modifikation geschützt werden. Hierzu muss die Signatur beim Deployment durch die Laufzeitumgebung validiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor, der Teil der (Steuerungs-/Rechen-)-vorrichtung bzw. -einheit sein kann, mindestens einen Verfahrensschritt des Verfahrens ausführt. Das Verfahren kann hierbei auch in einer Rechnerwolke (Cloud) implementiert sein, die das Verfahren ausführen kann und damit Ergebnisse des Verfahrens an eine Steuerungs-/Rechen-)-vorrichtung bzw. -einheit liefern kann, die entsprechende Befehle bzw. Maßnahmen an die Vorrichtungen insbesondere der oben genannten Anordnung richten kann.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein.

## Patentansprüche

1. Computerimplementiertes Verfahren zur Behandlung von mindestens einem unbefugten Zugriff auf mindestens eine gemeinsame Ressource (R) durch mindestens eine erste Containerinstanz (I2), wobei die mindestens eine erste Containerinstanz und mindestens eine zweite Containerinstanz (I1) auf einer gemeinsamen Laufzeitumgebung (L) eines Hostsystem (H) ausgeführt werden, wobei die mindestens eine zweite Containerinstanz, die mindestens eine gemeinsame Ressource nutzt,
aufweisend folgende Verfahrensschritte:
- Festlegen und bereitstellen mindestens eines Zugriffsberechtigungskriteriums (ZA, ZD) für eine der zweiten Containerinstanzen, das regelt, welche Operationen mit Zugriff auf die gemeinsame Ressource durch die mindestens eine erste Containerinstanz befugt oder unbefugt sind,
- Überprüfen beim Start einer neuen ersten Containerinstanz, ob für die zweite Containerinstanz zumindest ein Zugriffsberechtigungskriterium bereitgestellt worden ist, wobei das mindestens eine Zugriffsberechtigungskriterium in einem zur zweiten Containerinstanz gehörigen Containerabbild (A) beinhaltet ist,
- bei einer positiven Überprüfung Überwachen der Operationen der ersten Containerinstanz während ihrer Ausführung, ob diese Operationen unbefugt gemäß des zumindest einen Zugriffsberechtigungskriteriums sind,
- wenn beim Überwachen zumindest eine Operation als unbefugt erkannt wird, dann Einleiten einer den Zugriff auf die gemeinsame Ressource entgegenwirkende Behandlung mittels einer Alarmnachricht für die zweite Containerinstanz oder durch Stoppen der Ausführung der zweiten Containerinstanz.

2. Verfahren nach dem vorhergehenden Anspruch, **dadurch gekennzeichnet, dass** bei einer negativen Überprüfung die Operationen der ersten Containerinstanz überwacht werden und, wenn von Seiten der Laufzeitumgebung alle auf die gemeinsamen Ressourcen zugreifenden Operationen als unbefugt gelten, bei Ausführung einer solchen als unbefugt geltenden Operation eine den Zugriff auf die gemeinsame Ressource entgegenwirkende Behandlung mittels einer Alarmnachricht für die zweite Containerinstanz oder durch Stoppen der Ausführung der zweiten Containerinstanz eingeleitet wird.

3. Verfahren nach einem der vorhergehenden Ansprüche, **dadurch kennzeichnet, dass** die mindestens eine gemeinsame Ressource die von Containerinstanzen jeweils verwendeten Namensräume und/oder den vom Hostsystem verwendeten Namensraum und/oder Dateisystemobjekte und/oder Gerätedateien umfassen.

4. Verfahren nach einem der vorhergehenden Ansprüche, **dadurch gekennzeichnet, dass** aus dem mindestens einen Zugriffsberechtigungskriterium abgeleitet werden kann, ob eine Alarmnachricht oder ein Stoppen der Ausführung der zweiten Containerinstanz eingeleitet werden soll.

5. System geeignet zur Behandlung von mindestens einem unbefugten Zugriff auf mindestens eine gemeinsame Ressource durch mindestens eine erste Containerinstanz (I2), wobei die mindestens eine erste Containerinstanz (I2) und mindestens eine zweite Containerinstanz (I1) auf einer gemeinsamen Laufzeitumgebung (L) eines Hostsystem (H) ausführbar sind, wobei die mindestens eine zweite Containerinstanz die mindestens ein gemeinsame Ressource (R) nutzt, umfassend eine Bereitstellungseinheit (B) und eine Überwachungseinheit (W), die derart ausgestaltet sind, dass
- durch die Bereitstellungseinheit mindestens ein Zugriffsberechtigungskriteriums (ZA, ZD) für eine der zweiten Containerinstanzen festlegt und bereitstellt wird, welches regelt, welche Operationen mit Zugriff auf die gemeinsame Ressource durch die mindestens eine erste Containerinstanz befugt oder unbefugt sind, und dass
- durch die Überwachungseinheit beim Start einer neuen ersten Containerinstanz überprüft wird, ob für die zweite Containerinstanz zumindest ein Zugriffsberechtigungskriterium bereitgestellt worden ist, wobei das mindestens eine Zugriffsberechtigungskriterium in einem zur zweiten Containerinstanz gehörigen Containerabbild (A) beinhaltet ist, und
- bei einer positiven Überprüfung durch die Überwachungseinheit die Operationen der ersten Containerinstanz während ihrer Ausführung überwacht werden, ob diese Operationen unbefugt gemäß des zumindest einen Zugriffsberechtigungskriteriums sind,
- wenn beim Überwachen zumindest eine Operation als unbefugt erkannt wird, dann eine den Zugriff auf die gemeinsamen Ressourcen entgegenwirkende Behandlung mittels einer Alarmnachricht für die zweite Containerinstanz oder durch Stoppen der Ausführung der zweiten Containerinstanz eingeleitet wird.

6. System nach dem vorhergehenden Anspruch, **dadurch gekennzeichnet, dass** bei einer negativen Überprüfung die Operationen der ersten Containerinstanz überwacht werden und, wenn von Seiten der Laufzeitumgebung alle auf die gemeinsamen Ressourcen zugreifenden Operationen als unbefugt gelten, bei Ausführung einer solchen als unbefugt geltenden Operation eine den Zugriff auf die gemeinsame Ressource entgegenwirkende Behandlung mittels einer Alarmnachricht für die zweite Containerinstanz oder durch Stoppen der Ausführung der zweiten Containerinstanz eingeleitet wird.

7. Computerprogrammprodukt umfassend ein nichtflüchtiges Speichermedium, auf dem ein ladbarer und ausführbarer Programmkode oder verteilt ladbare und ausführbare Programmkodemodule gespeichert sind, welches oder welche das Verfahren nach einem der vorhergehenden Verfahrensansprüchen in einem des Systems nach den vorhergehenden Systemansprüchen ausführt.

## Claims

1. Computer-implemented method for handling at least one unauthorized access operation to at least one common resource (R) by at least one first container instance (I2), wherein the at least one first container instance and at least one second container instance (I1) are executed on a common runtime environment (L) of a host system (H), wherein the at least one second container instance uses the at least one common resource, comprising the following method steps:
- defining and providing at least one access authorization criterion (ZA, ZD) for one of the second container instances that rules which operations involving accessing of the common resource by the at least one first container instance are authorized or unauthorized,
- checking, when a new first container instance is launched, whether at least one access authorization criterion has been provided for the second container instance, wherein the at least one access authorization criterion is present in a container image (A) belonging to the second container instance,
- in the event of a positive check, monitoring the operations of the first container instance during execution thereof as to whether these operations are unauthorized in accordance with the at least one access authorization criterion, and
- if, during monitoring, at least one operation is recognized as unauthorized, then initiating an action that counteracts the accessing of the common resource, by way of an alert message for the second container instance or by stopping the execution of the second container instance.

2. Method according to the preceding claim, **characterized in that**, in the event of a negative check, the operations of the first container instance are monitored and, if, from the point of view of the runtime environment, all operations accessing the common resources are considered to be unauthorized, when such an operation considered to be unauthorized is executed, an action that counteracts the accessing of the common resource is initiated by way of an alert message for the second container instance or by stopping the execution of the second container instance.

3. Method according to either of the preceding claims, **characterized in that** the at least one common resource comprises the namespaces respectively used by container instances and/or the namespace used by the host system and/or file system objects and/or device files.

4. Method according to one of the preceding claims, **characterized in that** it is possible to derive, from the at least one access authorization criterion, whether an alert message or stoppage of the execution of the second container instance should be initiated.

5. System suitable for handling at least one unauthorized access operation to at least one common resource by at least one first container instance (I2), wherein the at least one first container instance (I2) and at least one second container instance (I1) are able to be executed on a common runtime environment (L) of a host system (H), wherein the at least one second container instance uses the at least one common resource (R), comprising a provisioning unit (B) and a monitoring unit (W), which are designed such that
- the provisioning unit defines and provides at least one access authorization criterion (ZA, ZD) for one of the second container instances that rules which operations involving accessing of the common resource by the at least one first container instance are authorized or unauthorized, and that
- the monitoring unit checks, when a new first container instance is launched, whether at least one access authorization criterion has been provided for the second container instance, wherein the at least one access authorization criterion is present in a container image (A) belonging to the second container instance, and
- in the event of a positive check, the monitoring unit monitors the operations of the first container instance during execution thereof as to whether these operations are unauthorized in accordance with the at least one access authorization criterion,
- if, during monitoring, at least one operation is recognized as unauthorized, then an action that counteracts the accessing of the common resources is initiated by way of an alert message for the second container instance or by stopping the execution of the second container instance.

6. System according to the preceding claim, **characterized in that**, in the event of a negative check, the operations of the first container instance are monitored and, if, from the point of view of the runtime environment, all operations accessing the common resources are considered to be unauthorized, when such an operation considered to be unauthorized is executed, an action that counteracts the accessing of the common resource is initiated by way of an alert message for the second container instance or by stopping the execution of the second container instance.

7. Computer program product comprising a non-volatile memory medium that stores a loadable and executable program code or program code modules able to be loaded and executed in distributed fashion, said computer program product or program code modules executing the method according to one of the preceding method claims in a system according to either of the preceding system claims.

## Revendications

1. Procédé mis en œuvre par ordinateur destiné à la gestion d'au moins un accès non autorisé à au moins une ressource commune (R) par le biais d'au moins une première instance de conteneur (I2), dans lequel l'au moins une première instance de conteneur et l'au moins une seconde instance de conteneur (I1) sont réalisées sur un environnement de temps d'exécution commun (L) d'un système hôte (H), dans lequel l'au moins une seconde instance de conteneur qui utilise au moins une ressource commune présente les étapes de procédé suivantes :
- définition et mise à disposition d'au moins un critère d'autorisation d'accès (ZA, ZD) pour une des secondes instances de conteneur qui règle quelles opérations avec accès à la ressource commune sont autorisées ou non autorisées par l'au moins une première instance de conteneur,
- vérification lors du démarrage d'une nouvelle première instance de conteneur pour déterminer si au moins un critère d'autorisation d'accès a été mis à disposition pour la seconde instance de conteneur, dans lequel l'au moins un critère d'autorisation d'accès est contenu dans une image de conteneur (A) appartenant à la seconde instance de conteneur,
- lors d'une vérification positive, surveillance des opérations de la première instance de conteneur pendant sa réalisation pour déterminer si ces opérations ne sont pas autorisées selon l'au moins un critère d'autorisation d'accès,
- lorsque lors de la surveillance au moins une opération est reconnue comme n'étant pas autorisée, alors introduction d'un traitement s'opposant à l'accès à la ressource commune au moyen d'un message d'alerte pour la seconde instance de conteneur ou par le biais de l'arrêt de la réalisation de la seconde instance de conteneur.

2. Procédé selon la revendication précédente, **caractérisé en ce que** lors d'une vérification négative les opérations de la première instance de conteneur sont surveillées et, lorsque depuis des côtés de l'environnement de temps d'exécution la totalité des opérations d'accès aux ressources communes sont considérées comme non autorisées, lors de la réalisation d'une telle opération considérée comme non autorisée un traitement s'opposant à l'accès à la ressource commune est introduit au moyen d'un message d'alerte pour la seconde instance de conteneur ou par le biais de l'arrêt de la réalisation de la seconde instance de conteneur.

3. Procédé selon l'une quelconque des revendications précédentes, **caractérisé en ce que** l'au moins une ressource commune comprend les espaces de noms utilisés respectivement par des instances de conteneur et/ou l'espace de nom utilisé par le système hôte et/ou des objets de système de données et/ou des données d'appareil.

4. Procédé selon l'une quelconque des revendications précédentes, **caractérisé en ce que**, à partir de l'au moins un critère d'autorisation d'accès il peut être déduit si un message d'alerte ou un arrêt de la réalisation de la seconde instance de conteneur doit être introduit.

5. Système destiné pour le traitement d'au moins un accès non autorisé à au moins une ressource commune par le biais d'au moins une première instance de conteneur (I2), dans lequel l'au moins une première instance de conteneur (I2) et l'au moins une seconde instance de conteneur (I1) peuvent être réalisées sur un environnement de temps d'exécution commun (L) d'un système hôte (H), dans lequel l'au moins une seconde instance de conteneur utilise l'au moins une ressource commune (R), comprenant une unité de mise à disposition (B) et une unité de surveillance (W), qui sont conçues de telle sorte que
- par le biais de l'unité de mise à disposition au moins un critère d'autorisation d'accès (ZA, ZD) pour une des secondes instances de conteneur est défini et mis à disposition, qui règle quelles opérations avec accès à la ressource commune sont autorisées ou non autorisées par l'au moins une première instance de conteneur et en ce que
- par le biais de l'unité de surveillance lors du démarrage d'une nouvelle première instance de conteneur il est vérifié si au moins un critère d'autorisation d'accès a été mis à disposition pour la seconde instance de conteneur, dans lequel l'au moins un critère d'autorisation d'accès est contenu dans une image de conteneur (A) appartenant à la seconde instance de conteneur, et
- lors d'une vérification positive par le biais de l'unité de surveillance les opérations de la première instance de conteneur sont surveillées pendant leur réalisation pour déterminer si ces opérations ne sont pas autorisées selon l'au moins un critère d'autorisation d'accès,
- lorsque lors de la surveillance au moins une opération est reconnue comme étant non autorisée, alors un traitement s'opposant à l'accès aux ressources communes est introduit au moyen d'un message d'alerte pour la seconde instance de conteneur ou par le biais de l'arrêt de la réalisation de la seconde instance de conteneur.

6. Système selon la revendication précédente, **caractérisé en ce que** lors d'une vérification négative les opérations de la première instance de conteneur sont surveillées et, lorsque depuis des côtés de l'environnement de temps d'exécution la totalité des opérations d'accès aux ressources communes sont considérées comme non autorisées, lors de la réalisation d'une telle opération considérée comme non autorisée un traitement empêchant l'accès à la ressource commune est introduit au moyen d'un message d'alerte pour la seconde instance de conteneur ou par le biais de l'arrêt de la réalisation de la seconde instance de conteneur.

7. Produit de programme informatique comprenant un support de stockage non volatil, sur lequel un code de programme chargeable et réalisable ou des modules de code de programme chargeables et réalisables de manière répartie et réalisables sont stockés, lequel ou lesquels réalisent le procédé selon l'une quelconque des revendications de procédé précédentes dans un système selon les revendications de système précédentes.
